# FASCICULE DE BREVET EUROPEEN

(11) **EP 3 860 785 B1**
(45) Date de publication et mention de la délivrance du brevet: **07.12.2022**
(21) Numéro de dépôt: 19779486.0
(22) Date de dépôt: 01.10.2019
(51) Int. Cl.: B22F 10/14, B22F 10/10, B22F 3/10, B22F 3/12, B22F 3/105, B22F 5/00, B22F 5/10, B28B 1/00, B28B 3/02, B28B 11/00, B29C 33/60, B33Y 10/00, B22F 3/14, B22F 3/15

(54) **PROCÉDÉ DE FABRICATION DE PIÈCE DE FORME COMPLEXE PAR FRITTAGE SOUS PRESSION À PARTIR D'UNE PRÉFORME**
VERFAHREN ZUR HERSTELLUNG EINES TEILES MIT KOMPLEXER FORM DURCH DRUCKSINTERN AUSGEHEND VON EINER VORFORM
METHOD FOR MANUFACTURING A PART OF COMPLEX SHAPE BY PRESSURE SINTERING STARTING FROM A PREFORM

(30) Priorité: 02.10.2018 FR 1859100
(43) Date de publication de la demande: 11.08.2021
(73) Titulaire: NORIMAT, 31300 Toulouse Occitanie (FR)
(72) Inventeur: BEYNET, Yannick, 31000 Toulouse Occitanie (FR); EPHERRE, Romain, 31300 Toulouse Occitanie (FR)
(74) Mandataire: Junca, Eric
(86) Numéro de dépôt international: PCT/EP2019/076550
(87) Numéro de publication internationale: WO 2020/070107

(56) Documents cités:
- WO-A1-2016/030654
- WO-A2-2016/189312

## Description

### DOMAINE TECHNIQUE

L'invention se rapporte à un procédé de fabrication d'une pièce de forme complexe par frittage sous pression à partir d'une préforme réalisée par une technique additive.

L'invention concerne le domaine de la fabrication de pièces, en particulier de pièces mécaniques industrielles, par densification de matériaux poreux ou pulvérulents. Ce domaine recouvre différentes techniques de densification par frittage sous charge isostatique, uni ou multiaxial, par exemple le pressage à chaud, notamment isostatique, le frittage flash à haute pression dit « SPS » (acronyme de « Spark Plasma Sintering » en terminologie anglaise), ou le frittage sélectif par laser.

Plus particulièrement la technique de frittage SPS consiste à consolider un volume de poudres de céramiques, de polymères ou métalliques dans un moule conducteur pour l'obtention rapide de matériaux denses à microstructure fine. Cette consolidation est réalisée par l'application simultanée d'une charge (sous une forte pression uni-axiale exercée sur le moule, par exemple de l'ordre de 100 MPa et d'un chauffage fourni par un courant continu crénelé de grande intensité dans le moule, de l'ordre de 500 à 10000A, le frittage complet des poudres étant alors obtenu en seulement quelques minutes.

L'avantage essentiel de cette technique de frittage SPS réside dans le fait que, étant donné la vitesse de montée en température élevée et les durées de séjour à haute température relativement courtes, la densification du matériau ne s'accompagne pas, ou très peu, d'une croissance cristalline.

### ÉTAT DE LA TECHNIQUE

La pression uni-axiale exercée par la technique de frittage SPS présente l'inconvénient de provoquer une hétérogénéité de densification, en particulier pour des pièces de formes complexes ayant des épaisseurs fortement différenciées induisant un retrait de matière non uniforme, dans le temps et dans l'espace restreint, entre les zones d'épaisseurs différentes. De manière générale, une forme complexe se rapporte à une forme à courbure variable avec ou sans variation d'épaisseur, ou à forte variation d'épaisseur avec ou sans variation de courbure, et/ou à rupture géométrique.

Afin de remédier à cet inconvénient d'inhomogénéité de densification, le document de brevet FR 3 042 992 prévoit d'ajouter une couche d'interface déformable entre la matière pulvérulente (ou poreuse) et la face de contre-forme du moule adaptée pour réaliser la pièce.

Cependant, les techniques de frittage présentent également un problème lié à l'utilisation de moule ou de contre-formes de moule qui ne permettent pas de réaliser un démoulage aisé lorsque la pièce présente une forme complexe, formant en particulier des contre-dépouilles difficilement accessibles et donc des dépouilles difficilement démoulables sans détruire partiellement la pièce.

Les contre-formes peuvent être des empreintes obtenues par pressage d'un lit de poudre céramique agglomérée par un liant ou par liantage de poudre céramique sur une préforme polymère, la contre-forme étant recouverte d'une interface inerte. Et ces techniques présentent de fortes limitations au regard des géométries accessibles, dues aux problèmes de contre-dépouilles des formes complexes, et de l'état de surface de ces contre-formes qui nécessite un recouvrement par une interface.

Pour réaliser des contre-formes compatibles avec des contre-dépouilles démoulables, il convient alors de multiplier le nombre de contre-formes afin d'éviter les problèmes de démoulage. Il est alors nécessaire de fabriquer les outils adaptés à chaque contre-forme, entraînant des étapes supplémentaires de conception et d'usinage. L'assemblage de ces nombreuses contre-formes est également source de défauts (géométrie non ajustée de la pièce finale, amorces de fissures, perte de matière, etc.).

Afin de réaliser des pièces de forme complexe par densification de matière, il est également connu d'utiliser la technologie sous charge isostatique multiaxiale HIP (acronyme de « Hot Isostatic Pressing », à savoir le pressage isostatique à chaud). Cette technologie est illustrée par exemple par le document WO 2016/189312 qui prévoit l'utilisation d'un four de densification rempli d'un matériau de transfert de pression entourant totalement la peau extérieure d'un objet préformé par une technique d'impression additive de sorte à posséder une peau et un volume interne de densité différentes. Une telle approche met en œuvre des moyens surdimensionnés, complexes et chronophages, en particulier dans le cadre de la technologie HIP.

Alternativement, le moule du document WO 2016/030654, qui concerne la réalisation de composants par la technologie HIP, est réalisé par l'utilisation d'un modèle sacrificiel du composant entouré de céramique. Le modèle est évacué pour former une cavité et une couche métallique est appliquée sur la céramique pour constituer le moule qui, rempli de poudre métallique est ensuite placé dans un récipient de technologie HIP. Cette solution reste également complexe et met en œuvre la technologie HIP.

### EXPOSÉ DE L'INVENTION

L'invention vise à s'affranchir de cette problématique, et pour ce faire, l'invention prévoit d'utiliser une préforme de la pièce réalisée par une technique additive à commande numérique combinée à une densification uni-axiale.

Plus précisément, la présente invention a pour objet un procédé de fabrication d'une pièce de forme complexe par dépôt successif de couches selon une technique d'impression additive 3D et frittage sous pression, selon la revendication 1, ce procédé comportant les étapes suivantes: une étape liminaire de réalisation d'un modèle à partir d'une matière choisie entre des matières poreuses ou pulvérulentes à base d'un alliage métallique, une céramique, un matériau composite et un matériau perdu par formation de couches successives déposées selon la technique d'impression additive en trois dimensions (3D) pilotée numériquement, suivie d'une étape d'introduction d'une préforme en matériau poreux ou pulvérulent à densifier déduite du modèle dans un moule rempli de matière sacrificielle en matériau poreux ou pulvérulent en complément de la préforme. Le frittage de densification sous pression uni-axiale est alors appliqué au moule afin de former la pièce qui est finalement extraite du moule.

En particulier, la technique d'impression additive 3D peut être choisie entre la stéréolithographie, la projection de liant (« binder jetting » en terminologie anglaise), l'extrusion pilotée, la fusion de filaments, l'impression jet d'encre et le jet d'aérosol.

De plus, la densification uni-axiale permet une densification simplifiée par rapport à une densification isostatique tridimensionnelle de type HIP, tout en permettant d'obtenir des caractéristiques d'homogénéité physico-chimique et de précision de dimensions de pièce.

Selon des caractéristiques avantageuses :
- la matière sacrificielle est en un matériau qui peut être choisi entre une céramique, une silice, un silicate métallique et un matériau composite;
- la céramique peut être choisie entre de la poudre d'YSZ (de la zircone stabilisée par l'oxyde d'yttrium), d'ATZ (de la zircone renforcée par de l'alumine), de ZTA (de l'alumine renforcée par de la zircone) et d'alumine présentant des taux de densification pouvant aller de 40 à 80%;
- une couche d'interface peut être agencée sur au moins une face de la préforme avant son inclusion dans le moule, afin d'éviter toute interaction entre la préforme et le matériau sacrificiel;
- les matériaux de préforme, de couche d'interface et de matière sacrificielle présentent un même comportement de densification aux températures de début et de fin de frittage.

Une étape de déliantage de la préforme peut être avantageusement effectuée en sortie d'impression additive 3D par un traitement thermique à des températures comprises entre 200 et 600°C et des vitesses de montée en température comprises entre 0, 1 et 1°C/min, suivant le matériau de la contre-forme. Cette étape permet d'éliminer les composés organiques introduits dans le matériau pendant la réalisation de la contre-forme.

De plus, l'étape de déliantage peut être suivie d'une étape de pré-frittage qui consiste à traiter thermiquement la contre-forme à des températures supérieures, entre 600 et 1500°C suivant le matériau de la contre-forme, cette étape permettant de débuter la densification de la contre-forme, en lui donnant une tenue mécanique et en favorisant l'application de l'interface.

Selon un premier mode de mise en œuvre, le modèle fournit directement la préforme avant densification et le moule est rempli de matériau pulvérulent ou poreux sacrificiel avant et après l'introduction de la préforme.

Selon un autre mode de mise en œuvre, le procédé prévoit que le modèle est réalisé par l'impression additive en matériau perdu - par exemple en cire ou en résine à faible température de fusion -, puis une contre-forme en matériau poreux ou pulvérulent est formée autour dudit modèle. Le matériau perdu étant éliminé, la contre-forme est ensuite remplie par le matériau à densifier qui constitue la préforme correspondant au modèle, avant d'être introduite dans le moule de frittage sous pression, le moule étant complété par le matériau sacrificiel. Après l'application du frittage sous pression, la pièce est extraite de la contre-forme.

Sur les figures, des éléments identiques sont repérés par un même signe de référence qui renvoie au(x) passage(s) de la description qui le mentionne(nt).

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, des vues en perspective des étapes essentielles (1A à 1F) d'un exemple de mise en œuvre du procédé selon un premier mode de fabrication d'une pièce de forme complexe à partir d'une préforme; et
- la figure 2, des vues schématiques en coupe des étapes essentielles (2A à 2G) d'un exemple simplifié de mise en œuvre du procédé selon un deuxième mode de fabrication d'une pièce de forme complexe à partir d'une préforme.

### DESCRIPTION DÉTAILLÉE

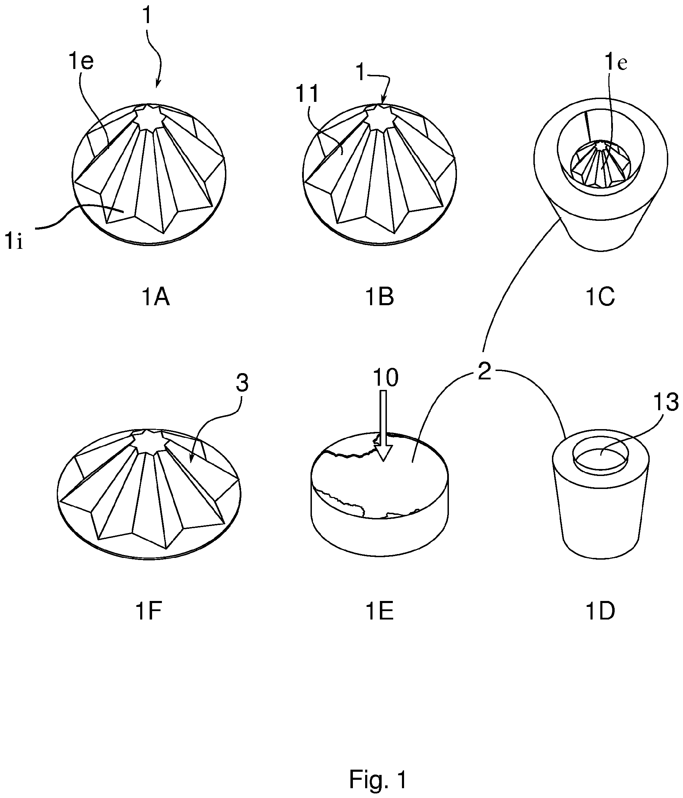

Les étapes essentielles 1A à 1F d'un exemple du procédé de fabrication d'une pièce de forme complexe selon l'invention sont illustrées en figure 1 par des vues en coupe. A l'étape 1A, un modèle métallique poreux 1 de la pièce à fabriquer est constitué par projection en couches successives selon une technique d'impression additionnelle 3D, le binder jetting dans cet exemple. Le modèle reproduit une configuration préenregistrée dans l'unité de commande du système de projection (non représenté) et constitue la préforme de la pièce à obtenir après frittage. Cette préforme définit la géométrie de la forme de la pièce à fabriquer dans le procédé de fabrication selon l'invention.

Le matériau de la pièce se présente initialement sous forme de matière pulvérulente ou poreuse, à base d'un alliage métallique, en particulier dans les exemples illustrés, à base d'un alliage de titane, par exemple de titane et d'aluminium, d'un acier inoxydable ou d'un superalliage à base de nickel dans la famille des Renés.

Avantageusement, un déliantage de la préforme sous forme de modèle 1 est mise en œuvre par un traitement thermique à des températures comprises entre 200 et 600°C, 400°C dans l'exemple, avec une vitesse de montée en température comprises entre 0, 1 et 1°C/min, 0,5°C/min dans l'exemple. Cette étape permet d'éliminer les composés organiques qui peuvent s'introduire dans la poudre de céramique pendant l'impression 3D de réalisation des parties de contre-forme.

De préférence, un pré-frittage est également réalisé après le déliantage. Ce pré-frittage consiste à traiter la préforme 1 à des températures encore plus élevées, par exemple entre 600°C à 1500°C suivant les matériaux utilisés, à 1200°C dans l'exemple. Ce traitement thermique permet de commencer la densification des parties de contre-forme pour leur donner une tenue mécanique et faciliter ainsi l'application de couche(s) d'interface, comme décrit ci-dessous.

A l'étape 1B, une couche d'interface de graphite 11 est avantageusement déposée uniformément par pulvérisation sur la face externe 1e (cf. étape 1C) ou la face interne 1i (cf. étape 1A) de la préforme 1. Alternativement, une couche de graphite est pulvérisée sur les deux faces 1i, 1e de la préforme 1. Cette couche de graphite 11 permet d'éviter toute interaction entre le modèle 1 et le matériau pulvérulent sacrificiel - en céramique dans l'exemple - qui sera déposé ultérieurement afin de faciliter le démoulage final.

En référence à l'étape 1C, la préforme 1 recouverte de la couche de graphite 11 est introduite dans le moule de frittage sous pression SPS 2 sur un lit de matière sacrificielle en poudre de céramique préalablement introduit (non visible). Puis de la poudre sacrificielle 13 est également introduite dans le moule 2 de sorte que ce moule 2 est rempli d'un assemblage de matières à densifier (étape 1C). La poudre sacrificielle permet de compenser les écarts de densification lors du frittage qui suit.

Le frittage SPS est alors appliqué au moule 2 (charge 10 de 50MPa, intensité de courant continu de 3000A, ce qui entraîne la densification de l'assemblage de matière contenu dans ce moule 2 (étape 1E). La pièce densifiée 3 est alors sortie du moule 2 par démoulage et élimination des parties de matière sacrificielle 13 qui entourent la pièce 3 (étape 1F).

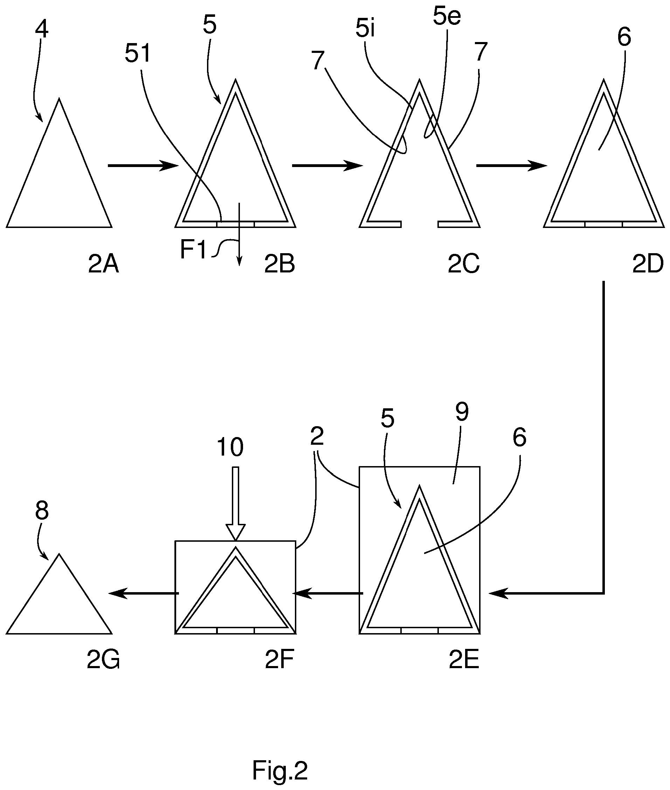

Selon un autre mode de réalisation, tel qu'illustré par les vues schématiques des étapes 2A à 2G de la figure 2, un modèle en cire perdue 4 est d'abord imprimé par stéréolithographie (étape 2A). Le modèle présente une forme de cône dans l'exemple.

Une contre-forme conique 5 est ensuite appliquée autour de la cire 4, sous forme de barbotine dans l'exemple illustré (étape 2B). Alternativement, le matériau poreux formant la contre-forme peut être une céramique, une silice, un silicate métallique, un matériau composite ou équivalent.

La cire 4 est alors éliminée de la contre-forme 5 par un chauffage adaptée permettant de liquéfier cette cire. Le liquide s'échappe (flèche F1) par un orifice 51 formé à la base du cône de contre-forme 5 qui est ainsi totalement vidée (étape 2C).

Avantageusement la contre-forme 5 est recouverte sur sa face interne 5i d'une couche d'interface de graphite 7 afin de faciliter le démoulage et d'éviter toute interaction entre la contre-forme et la matière à densifier. Alternativement, une couche de graphite est pulvérisée sur au moins l'une des faces 5i, 5e de la contre-forme 5.

En référence à l'étape 2D, la contre-forme 5 est remplie de matériau pulvérulent à densifier constituant la préforme 6 de la pièce à fabriquer et correspondant au modèle en cire. La couche de graphite 7 de la face interne 5i de la contre-forme 5 vient alors recouvrir la préforme 6.

Des étapes de déliantage et de pré-frittage sont alors avantageusement mises en œuvre dans les conditions de température et de vitesse de montée en température décrites ci-dessus.

La contre-forme 5 et la préforme 6 sont ensuite introduites dans le moule de frittage SPS 2 (étape 2E) et de la matière sacrificielle 9 est introduite complémentairement dans le moule 2. La matière sacrificielle est, dans les exemples illustrés, un matériau choisi entre une céramique, une silice, un silicate métallique, un matériau composite ou équivalent.

La densification par SPS est mise en œuvre par l'application d'une charge 10 et d'un courant continu de 3000A (étape 2F). La poudre sacrificielle permet de compenser les écarts de densification lors du frittage.

La pièce 8 est alors extraite du moule 2 par démoulage, par élimination de la matière sacrificielle 9 et de la contre-forme 5 (étape 2G).

L'invention n'est pas limitée aux exemples décrits et représentés. Ainsi, les couches d'interface peuvent être constituées par un matériau poreux ou pulvérulent autre que le graphite, en particulier un oxyde d'Yttrium, du nitrure de bore ou équivalent.

Le premier mode de mise en œuvre est particulièrement adapté aux pièces creuses, présentant des faces opposées convexe et concave, et le deuxième mode aux pièces pleines, biconvexes.

Quel que soit le mode, les matériaux de la matière sacrificielle, de la contre-forme, de la préforme et des couches d'interface présentent un comportement similaire se rapportant aux températures de début et de fin de frittage. La céramique utilisée se présente sous forme de poudre constituée à base d'YSZ (de la zircone stabilisée par l'oxyde d'yttrium), d'ATZ (de la zircone renforcée par de l'alumine), de ZTA (de l'alumine renforcée par de la zircone) et Alumine présentant des taux de densification pouvant aller de 40 à 80%.

De plus, les couches d'interface peuvent être appliquées sous une forme choisie entre une pulvérisation, un dépôt de poudre liantée par un liant correspondant à la poudre (solution aqueuse, solution de Rhodovil^{®}, etc.), une feuille de forme adaptée ou équivalent.

Par ailleurs, dans le premier mode de réalisation, la préforme est directement le modèle dans l'exemple détaillé. De manière générale, cette préforme peut également se déduire d'un modèle de base par une autre technique d'impression additive 3D et/ou en utilisant un autre matériau, ce qui permet de changer de technique d'impression et de matériau d'impression en fonction du choix du matériau pour la pièce à fabriquer.

## Revendications

1. Procédé de fabrication d'une pièce de forme complexe (3; 8) par dépôt successif de couches selon une technique d'impression additive 3D et frittage sous pression, **caractérisé en ce qu'**il comporte les étapes suivantes: une étape liminaire de réalisation d'un modèle (1; 4) à partir d'une matière choisie entre des matières poreuses ou pulvérulentes à base d'un alliage métallique, une céramique, un matériau composite et un matériau perdu par formation de couches successives déposées selon la technique d'impression additive 3D pilotée numériquement, suivie d'une étape d'introduction d'une préforme (1; 6) en matériau poreux ou pulvérulent déduite du modèle (1;4) à densifier dans un moule (2) rempli de matière sacrificielle en matériau poreux ou pulvérulent (13; 9) en complément de la préforme (1; 6), le frittage de densification sous pression uni-axiale (10) étant alors appliqué au moule (2) afin de former la pièce (3; 8) qui est finalement extraite du moule (2).

2. Procédé de fabrication selon la revendication 1, dans lequel la technique d'impression additive 3D est choisie entre la stéréolithographie, la projection de liant, l'extrusion pilotée, la fusion de filaments, l'impression jet d'encre et le jet d'aérosol.

3. Procédé de fabrication selon l'une quelconque des revendications précédentes, dans lequel une couche d'interface (11; 7) est agencée sur au moins une face (1i, 1e; 5i, 5e) de la préforme avant son inclusion dans le moule (2).

4. Procédé de fabrication selon la revendication précédente, dans lequel les matériaux de préforme, de couche d'interface et de matière sacrificielle présentent un même comportement de densification aux températures de début et de fin de frittage.

5. Procédé de fabrication selon l'une quelconque des revendications précédentes, dans lequel la matière sacrificielle (13; 9) est en un matériau choisi entre une céramique, une silice, un silicate métallique et un matériau composite.

6. Procédé de fabrication selon la revendication précédente, dans lequel la céramique est choisie entre de la poudre d'YSZ, d'ATZ, de ZTA et d'alumine présentant des taux de densification pouvant aller de 40 à 80%.

7. Procédé de fabrication selon l'une quelconque des revendications 3 ou 4, dans lequel l'interface est constituée par une couche de matériau choisi entre du graphite, un oxyde d'yttrium et du nitrure de bore.

8. Procédé de fabrication selon l'une quelconque des revendications 3 ou 4, dans lequel la couche d'interface (11; 7) est appliquée sous une forme choisie entre une pulvérisation, un dépôt de poudre et une feuille de forme adaptée.

9. Procédé de fabrication selon l'une quelconque des revendications précédentes, dans lequel l'alliage métallique de la pièce à fabriquer est choisi entre un alliage de titane, un acier inoxydable et un superalliage à base de nickel dans la famille des Renés.

10. Procédé de fabrication selon l'une quelconque des revendications précédentes, **caractérisé en ce qu'**une étape de déliantage de la préforme (1; 6) est effectuée en sortie d'impression additive 3D par un traitement thermique à des températures comprises entre 200 et 600°C et des vitesses de montée en température comprises entre 0, 1 et 1°C/min.

11. Procédé de réalisation selon la revendication précédente, **caractérisé en ce que** l'étape de déliantage est suivie d'une étape de pré-frittage par traitement thermique de la préforme (1; 6) à une température comprises entre 600 et 1500°C.

12. Procédé de fabrication selon l'une quelconque des revendications précédentes, **caractérisé en ce que** le modèle (1) en matière poreuse ou pulvérulente constitue la préforme avant densification, et **en ce que** le moule (2) est rempli de matière sacrificielle pulvérulente ou poreuse (13) avant et après l'introduction de la préforme (1).

13. Procédé de fabrication selon l'une quelconque des revendications 1 à 11, **caractérisé en ce que** le modèle (4) est réalisé en matériau perdu par l'impression additive et une contre-forme (5) en matériau poreux ou pulvérulent est formée autour dudit modèle (4), **en ce que**, le matériau perdu étant éliminé, la contre-forme (5) est ensuite remplie par le matériau à densifier qui constitue la préforme (6) correspondant au modèle (4), avant d'être introduite dans le moule de frittage sous pression (2), **en ce que** le moule (2) est complété par le matériau sacrificiel (9) et **en ce que**, après l'application du frittage sous pression (10), la pièce (8) est extraite de la contre-forme (5).

14. Procédé de fabrication selon la revendication précédente, dans lequel le matériau de la contre-forme (5) est choisi entre une céramique, une silice, un silicate métallique et un matériau composite, tout en présentant un même comportement de densification aux températures de début et de fin de frittage que celui des matériaux de la préforme (1; 6), de la matière sacrificielle (13; 9) et de la couche d'interface (7).

15. Procédé de fabrication selon la revendication précédente, dans lequel la céramique est choisie entre de la poudre d'YSZ, d'ATZ, de ZTA et Alumine présentant des taux de densification pouvant aller de 40 à 80%.

## Patentansprüche

1. Verfahren zur Herstellung eines Teils von komplexer Form (3; 8) durch aufeinanderfolgendes Aufbringen von Schichten gemäß einer additiven 3D-Druck-Technik und Drucksintern, **dadurch gekennzeichnet, dass** es die folgenden Schritte umfasst: einen einleitenden Schritt des Ausführens eines Modells (1; 4) aus einem Material, das unter porösen oder pulverförmigen Materialien auf Basis einer Metalllegierung, einer Keramik, einem Verbundwerkstoff und einem Einwegwerkstoff gewählt ist, durch Bilden von aufeinanderfolgenden Schichten, die gemäß der digital gesteuerten additiven 3D-Druck-Technik aufgebracht werden, gefolgt von einem Schritt des Einführens einer Vorform (1; 6) aus zu verdichtendem porösem oder pulverförmigem Werkstoff, die aus dem Modell (1; 4) abgeleitet ist, in ein Formwerkzeug (2), das mit Opfermaterial aus porösem oder pulverförmigem Werkstoff (13; 9) als Komplement zu der Vorform (1; 6) gefüllt ist, wobei das Verdichtungssintern unter uniaxialem Druck (10) dann auf das Formwerkzeug (2) angewandt wird, um das Teil (3; 8) zu bilden, das schließlich aus dem Formwerkzeug (2) entnommen wird.

2. Herstellungsverfahren nach Anspruch 1, bei dem die additive 3D-Druck-Technik unter Stereolithografie, Binder Jetting, gesteuerter Extrusion, Fused Filament, Tintenstrahldruck und Aerosol Jet gewählt ist.

3. Herstellungsverfahren nach einem der vorhergehenden Ansprüche, bei dem eine Schnittstellenschicht (11; 7) auf mindestens einer Fläche (1i, 1e; 5i, 5e) der Vorform vor ihrem Einschließen in das Formwerkzeug (2) angeordnet wird.

4. Herstellungsverfahren nach dem vorhergehenden Anspruch, bei dem die Werkstoffe der Vorform, der Schnittstellenschicht und des Opfermaterials bei den Anfangs- und Endtemperaturen des Sinterns das gleiche Verdichtungsverhalten aufweisen.

5. Herstellungsverfahren nach einem der vorhergehenden Ansprüche, bei dem das Opfermaterial (13; 9) aus einem Werkstoff ist, der unter einer Keramik, einem Siliciumdioxid, einem Metallsilikat und einem Verbundwerkstoff gewählt ist.

6. Herstellungsverfahren nach dem vorhergehenden Anspruch, bei dem die Keramik unter YSZ-, ATZ-, ZTA- und Aluminiumoxidpulver gewählt ist, das Verdichtungsraten aufweist, die von 40 bis 80 % reichen können.

7. Herstellungsverfahren nach einem der Ansprüche 3 oder 4, bei dem die Schnittstelle aus mindestens einer Schicht eines Werkstoffs besteht, der unter Graphit, Yttriumoxid und Bornitrid gewählt ist.

8. Herstellungsverfahren nach einem der Ansprüche 3 oder 4, bei dem die Schnittstellenschicht (11; 7) in einer Form appliziert wird, die zwischen einem Sprühen, einem Pulverauftrag und einer Folie von geeigneter Form gewählt ist.

9. Herstellungsverfahren nach einem der vorhergehenden Ansprüche, bei dem die Metalllegierung des herzustellenden Teils unter einer Titanlegierung, einem Edelstahl und einer Superlegierung auf Nickelbasis aus der Rene-Familie gewählt ist.

10. Herstellungsverfahren nach einem der vorhergehenden Ansprüche, **dadurch gekennzeichnet, dass** ein Schritt des Entbinderns der Vorform (1; 6) am Ausgang des additiven 3D-Drucks durch eine Wärmebehandlung bei Temperaturen zwischen 200 und 600 °C und Temperaturanstiegsgeschwindigkeiten zwischen 0,1 und 1 °C/min durchgeführt wird.

11. Herstellungsverfahren nach dem vorhergehenden Anspruch, **dadurch gekennzeichnet, dass** auf den Schritt des Entbinderns ein Schritt des Vorsinterns durch Wärmebehandlung der Vorform (1; 6) bei einer Temperatur zwischen 600 und 1500 °C folgt.

12. Herstellungsverfahren nach einem der vorhergehenden Ansprüche, **dadurch gekennzeichnet, dass** das Modell (1) aus porösem oder pulverförmigem Material die Vorform vor der Verdichtung bildet und dass das Formwerkzeug (2) vor und nach dem Einführen der Vorform (1) mit pulverförmigem oder porösem Opfermaterial (13) gefüllt ist.

13. Herstellungsverfahren nach einem der Ansprüche 1 bis 11, **dadurch gekennzeichnet, dass** das Modell (4) aus Einwegwerkstoff durch additives Drucken ausgeführt wird und eine Gegenform (5) aus porösem oder pulverförmigem Werkstoff um das Modell (4) herum geformt wird, dass, nachdem der Einwegwerkstoff eliminiert wurde, die Gegenform (5) anschließend mit dem zu verdichtenden Werkstoff gefüllt wird, das die dem Modell (4) entsprechende Vorform (6) bildet, bevor sie in das Drucksinter-Formwerkzeug(2) eingeführt wird, dass das Formwerkzeug (2) durch den Opferwerkstoff (9) ergänzt wird und dass, nach dem Anwenden des Drucksinterns (10), das Teil (8) aus der Gegenform (5) entnommen wird.

14. Herstellungsverfahren nach dem vorhergehenden Anspruch, bei dem der Werkstoff der Gegenform (5) unter einer Keramik, einem Siliciumdioxid, einem Metallsilikat und einem Verbundwerkstoff gewählt ist, wobei es jedoch das gleiche Verdichtungsverhalten bei den Anfangs- und Endtemperaturen des Sinterns aufweist wie die Werkstoffe der Vorform (1; 6), des Opfermaterials (13; 9) und der Schnittstellenschicht (7).

15. Herstellungsverfahren nach dem vorhergehenden Anspruch, bei dem die Keramik unter YSZ-, ATZ-, ZTA- und Aluminiumoxidpulver gewählt ist, das Verdichtungsraten aufweist, die von 40 bis 80 % reichen können.

## Claims

1. A method for manufacturing a part of complex shape (3; 8) by successive deposition of layers according to a technique of 3D additive printing and pressure sintering, **characterized in that** it comprises the following steps: an initial step of producing a model (1; 4) from a material chosen from porous or pulverulent materials based on a metal alloy, a ceramic, a composite material and a lost material by formation of successive layers deposited according to the digitally controlled 3D additive printing technique, followed by a step of introducing a preform (1; 6) made of porous or pulverulent material, derived from the model (1; 4), to be densified into a mold (2) filled with sacrificial porous or pulverulent material (13; 9) in addition to the preform (1; 6), the uniaxial densifying pressure sintering (10) then being applied to the mold (2) in order to form the part (3; 8) which is finally extracted from the mold (2).

2. The manufacturing method as claimed in claim 1, wherein the 3D additive printing technique is chosen from stereolithography, binder jetting, controlled extrusion, fused filament fabrication, inkjet printing and aerosol jet printing.

3. The manufacturing method as claimed in either one of the preceding claims, wherein an interface layer (11; 7) is arranged on at least one face (1i, 1e; 5i, 5e) of the preform before inclusion thereof in the mold (2).

4. The manufacturing method as claimed in the preceding claim, wherein the materials of the preform, of the interface layer and of the sacrificial material exhibit the same densifying behavior at the sintering start and end temperatures.

5. The manufacturing method as claimed in any one of the preceding claims, wherein the sacrificial material (13; 9) is a material chosen from a ceramic, a silica, a metal silicate and a composite material.

6. The manufacturing method as claimed in the preceding claim, wherein the ceramic is chosen from YSZ, ATZ, ZTA and alumina powder exhibiting degrees of densification that may range from 40 to 80%.

7. The manufacturing method as claimed in either one of claims 3 and 4, wherein the interface is formed by a layer of material chosen from graphite, an yttrium oxide and boron nitride.

8. The manufacturing method as claimed in either one of claims 3 and 4, wherein the interface layer (11; 7) is applied in a form chosen from a spray, a powder deposit and a sheet of suitable shape.

9. The manufacturing method as claimed in any one of the preceding claims, wherein the metal alloy of the part to be manufactured is chosen from a titanium alloy, a stainless steel and a nickel-based superalloy in the René family.

10. The manufacturing method as claimed in any one of the preceding claims, **characterized in that** a step of removing the binder from the preform (1; 6) is performed at the output of the 3D additive printing by means of a heat treatment at temperatures of between 200 and 600°C and rates of temperature rise of between 0.1 and 1°C/min.

11. The manufacturing method as claimed in the preceding claim, **characterized in that** the step of binder removal is followed by a step of pre-sintering by heat-treating the preform (1; 6) at a temperature of between 600 and 1500°C.

12. The manufacturing method as claimed in any one of the preceding claims, **characterized in that** the model (1) made of porous or pulverulent material constitutes the preform before densification, and **in that** the mold (2) is filled with pulverulent or porous sacrificial material (13) before and after introduction of the preform (1).

13. The manufacturing method as claimed in any one of claims 1 to 11, **characterized in that** the model (4) is produced from lost material by means of additive printing and a counterform (5) made of porous or pulverulent material is formed around said model (4), **in that**, the lost material being removed, the counterform (5) is then filled with the material to be densified which constitutes the preform (6) corresponding to the model (4), before being introduced into the pressure sintering mold (2), **in that** the sacrificial material (9) is added to the mold (2) and **in that**, after application of the pressure sintering (10), the part (8) is extracted from the counterform (5).

14. The manufacturing method as claimed in the preceding claim, wherein the material of the counterform (5) is chosen from a ceramic, a silica, a metal silicate and a composite material, while exhibiting the same densifying behavior at the sintering start and end temperatures as that of the materials of the preform (1; 6), of the sacrificial material (13; 9) and of the interface layer (7).

15. The manufacturing method as claimed in the preceding claim, wherein the ceramic is chosen from powdered YSZ, ATZ, ZTA, and alumina exhibiting degrees of densification that may range from 40 to 80%.
